# EUROPÄISCHE PATENTSCHRIFT

(11) **EP 0 590 112 B1**
(45) Veröffentlichungstag und Bekanntmachung des Hinweises auf die Patenterteilung: **12.11.2003**
(21) Anmeldenummer: 93906422.6
(22) Anmeldetag: 05.04.1993
(51) Int. Cl.: C08J 3/24, B27N 5/00, B27N 3/08, B29C 67/00

(54) **GERUCHSARME SCHALL- UND WÄRMEDÄMMUNG**
ODOURLESS ACOUSTIC AND THERMAL INSULATION
ISOLATION ACOUSTIQUE ET THERMIQUE INODORE

(30) Priorität: 06.04.1992 CH 111192
(43) Veröffentlichungstag der Anmeldung: 06.04.1994
(73) Patentinhaber: RIETER AUTOMOTIVE (INTERNATIONAL) AG, 8702 Zollikon (CH)
(72) Erfinder: CAVALLONI, Carlo, D-8180 Eschenmosen (CH); LA GROTTERIA, Antonio, I-13100 Vercelli (IT); FREYER, Harald, D-6442 Rotenburg an der Fulda (DE)
(74) Vertreter: Felber, Josef
(86) Internationale Anmeldenummer: CH9300090
(87) Internationale Veröffentlichungsnummer: WO93020131

(56) Entgegenhaltungen:
- EP-A- 0 076 429
- CH-A- 671 546
- US-A- 4 393 019
- US-A- 4 409 170
- CENTRAL PATENTS INDEX, BASIC ABSTRACTS JOURNAL Derwent Publications Ltd., London, GB; AN 73-34776U (24)

## Beschreibung

Die vorliegende Erfindung betrifft einen porösen, schallund/oder wärmedämmend wirkenden Formkörper, insbesondere zum Auskleiden schall- und/oder wärmeabstrahlender Fahrzeugteile, aus einem mit duroplastischen Bindemitteln versetzten und in einer Pressform ausgeformten und verfestigten, faserigen Halbfabrikat.
Die vorliegende Erfindung betrifft auch ein besonderes Verfahren zum Herstellen eines derartigen Formkörpers.

Solche Formkörper finden ihre Verwendung vorzugsweise in der Automobilindustrie, wo sie als Isoliermatten auf dem Karosserieboden, an der Stirnwand oder im Motor- resp. im Kofferraum befestigt werden. Für den passgenauen Einbau sind diese Formkörper den jeweiligen Konturen entsprechend geformt. Ihrer jeweiligen Verwendung entsprechend sind diese Formkörper mit einer stoffartigen Dekor- resp. gummiartigen Schutzschicht versehen.

Es ist der Automobilindustrie ein besonderes Anliegen die Fahrzeuge nicht nur aus Gründen des Komforts mit akustisch wirksamen Isolationen auszurüsten. Insbesondere ist heute allgemein bekannt, dass durch bestimmte Fahrgeräusche und Gerüche unerwünschte psychische und physische Reaktionen wie z.B. Stress und Übelkeit, bei den Insassen ausgelöst werden können.

Besonders gute Ergebnisse lassen sich mit Formkörpern aus faserigen Halbfabrikaten erzielen. Es sind deshalb auch eine Vielzahl von Verfahren zur Herstellung solcher aus Faservliesen gepresster Formkörper bekannt.

Zum Beispiel wird in der CH-671'546 ein derartiges lärmminderndes Bauelement beschrieben, dessen eine Schicht aus einer porösen thermoverformten Fasermatte besteht, deren vorwiegend natürliche Fasern mit einem duroplastischen Bindemittel, bspw. einem thermisch härtenden Phenolharz, Harnstoffharz und/oder Melaminharz, vorzugsweise mit Phenolformaldehyd- und Harnstofformaldehyd-Harzen vom Novolaktyp gebunden sind. Zur Herstellung dieser Fasermatte wird ein gestreutes Halbfabrikat verwendet, in welchem das Bindemittel als feinkörniges Pulver eingelagert ist. Dieses Halbfabrikat wird in eine heizbare Form eingebracht, auf 150°-200° Celsius aufgeheizt und ausgeformt.

Mit diesem Verfahren lassen sich schalldämmende Formkörper von bis zu 30 mm Dicke herstellen. Bei dickeren Formkörpern gelangt zu wenig Wärme in die inneren Bereiche und kann damit die Polymerisationsreaktion nur noch unvollständig ablaufen. Eine Erhöhung der Temperatur der Frompresse kommt wegen der verwendeten natürlichen Fasern und deren Verbrennungstemperatur nicht in Betracht.

Die JP-B-48'019'215 spricht ein analoges Problem an, wie es sich in der Holzspanplatten-Industrie stellt. Dort sollen zur Kompensation des Temperaturgradienten, wie er sich beim Verpressen von dickeren Spanplatten einstellt, mit unterschiedlichen Bindemitteln beschichtete Holzspäne verwendet werden, die derart übereinander geschichtet werden, dass die mit einem bei tieferen Temperaturen reagierenden Bindemittel beschichteten Holzspäne in die weniger heisse Mittelzone zu liegen kommen. Leider lässt sich aus dieser Druckschrift für den Fachmann auf dem Gebiet der vorliegenden Erfindung keine brauchbare Lehre entnehmen, insbesondere weil die zur Formung von schall- und wärmedänmenden Matten verwendeten Fasern nicht einzeln beschichtet sind.
Ebenso betrifft die US-A-4'409'170 die Herstellung von Produkten aus Holzfasern resp. Holzspänen und schlägt vor, als Wärmeträger ein unter Ueberdruck stehendes Fluid einzusetzen. Auch dieses Verfahren löst die eingangs erwähnten Emissionsprobleme nicht.

Das oben genannte Problem eines ausgeprägten Temperaturgradienten beim Verpressen von dicken Vliesstoffen und damit einer chemischen ungleichmässigen Reaktion der Bindemittel, wird auch in der EP-A-076429 aufgegriffen. Die in dieser Schrift vorgeschlagene Lösung zielt darauf ab einen Reaktionbeschleuniger einzusetzen und insbesondere vor der Hitzebehandlung beim Verpressen, auf die Oberfläche des Vlieses eine bei Hitze Ammoniak abspaltende Substanz bspw. Harnstoff anzubringen. Das durch dieses Vorgehen erzeugte zusätzliche Ammoniak durchdringt das Vlies schlagartig und erhöht die normalerweise niedrige Ammoniakkonzentration im Vliesinnern, was den Kondensationsprozess in diesem Bereich beschleunigt. Leider erweist sich dieses Verfahren als aufwendig, da die oberflächig aufgebrachte Harnstofflösung zusätzliche Herstellungschritte erfordert; die benötigte Reaktionswärme muss durch Heissluftkonvektion zugeführt werden.

Eine analoge Lösung wird auch in der US-4'623'499 vorgeschlagen: ein für die Polymerisationsreaktion geeignetes katalytisch wirkendes Reaktionsgas durch die geschlossene Pressform strömen zu lassen. Es hat sich jedoch gezeigt, dass auch mit dieser Durchströmtechnik (dynamisches Verfahren) keine geruchsfreie Formkörper hergestellt werden können. Insbesondere scheinen sich im Formkörper gut durchströmte und schlecht durchströmte Bereiche auszubilden. Ebenso scheinen verschieden stark verpresste Bereiche oder Bereiche mit erhöhtem Wassergehalt zu lokal stark differierenden Reaktionsauslösezeiten zu führen. Jedenfalls können damit Formkörper mit einer Dicke oberhalb 30 mm nicht befriedigend ausgehärtet werden und weisen an den Eintrittsstellen Verbrennungserscheinungen auf.

Ein unter der Bezeichnung HCTM bekannt gewordenes Verfahren verwendet überhitzten Wasserdampf - mit entsprechend erniedrigtem Feuchtigkeitsgehalt - und lässt diesen durch eine moderat aufgeheizte Pressform fliessen. Dabei kondensiert der überhitzte Wasserdampf vorerst an den kühleren Partien und lässt den Formling nass werden. Dieses Verfahren ermöglicht es Temperaturen von über 200° Celsius rasch und ohne entsprechendes Aufheizen des ganzen Presswerkzeugs zu erzielen. Leider werden mit diesem Verfahren unerwünscht hohe Mengen an toxischen Substanzen erzeugt, welche in einer zusätzlichen Einrichtung wieder aufgefangen werden müssen.

Ein wesentlicher Nachteil der oben geschilderten Verfahren besteht darin, dass das im Halbfabrikat pulverförmig vorliegende Bindemittel durch das strömende Medium wegtransportiert wird und deshalb zu lokalen Inhomogenitäten der Bindemittelverteilung führt. Ausserdem kondensieren diese derart weggeblasenen Harze in aller Regel an den Austrittsöffnungen der Pressform und bedingen eine aufwendige manuelle Wartung/Reinigung derselben. Als besonders problematisch erweisen sich jedoch die unerwünscht hohen Mengen an toxischen Substanzen (Formaldehyd, Ammoniak, Phenol etc.) welche durch die unvollständige Vernetzung der Bindemittel frei werden. Kritisch sind offensichtlich jene Bereiche in denen eine zuwenig wirksame Erwärmung bewerkstelligt wurde, so dass die Bindemittel wohl Ammoniak und Formaldehyd freigesetzt haben, jedoch das Harz auf Grund einer zu niedrigen Temperatur nicht in der Lage war sich mit dem Formaldehyd zu vernetzen.
Ausserdem unterliegen die Bereiche mit ungenügend vernetzten Bindemitteln einer raschen Zersetzung, bilden als sekundäre Effekte einen unangenehmen Geruch und sind potentionelle Fäulnis- und Schimmelherde.

Es ist deshalb die Aufgabe der vorliegenden Erfindung einen Formkörper zu schaffen, welcher die Nachteile der bekannten Formkörper nicht aufweist und insbesondere ein geringes Emissionspotential an toxischen Substanzen und unangenehmen Gerüchen aufweist.

Denkbare Lösungsansätze liegen etwa in der Verlängerung der Prozesszeit und/oder der Erhöhung der Prozesstemperatur. In diesem Zusammenhang ist zu bedenken, dass die maximal zulässige Temperatur, um eine Karbonisierung der Naturfasern zu vermeiden, um 180° Celsius liegt. In allen bekannten Fällen wird der Bindemittelanteil derart bemessen, dass auch in den sich nur schlecht vernetzenden Bereichen des Formkörpers eine genügende Stabilität erzielt wird. Die relativ hohen Anteile an unvernetzten Bindemitteln resp. Spaltprodukten wird dabei in Kauf genommen.

Erfindungsgemäss wird die gestellte Aufgabe jedoch dadurch gelöst, dass ein Formkörper geschaffen wird, dessen Bindemittel in allen Bereichen des porösen Faserkörpers gleichmässig vernetzt ist und welcher nur so viel Bindemittel enthält, dass die Formaldehydemission geringer als 15 - 20 ppm ist.
Bei allen bis anhin hergestellten Produkten zeigt sich nämlich, dass keine gleichförmige Durchpolymerisation resp. Vernetzung vorliegt und der Formkörper, je nach Verformungsgrad und Dicke stellenweise verbrannte und/oder gar nicht vernetzte Bereiche aufweist.

Es ist deshalb auch die Aufgabe der vorliegenden Erfindung ein Verfahren zur Herstellung eines erfindungsgemässen Formkörpers zu schaffen, mit welchem die Polymerisationreaktion an allen Orten des Faservlieses und unabhängig von der spezifischen Formgebung und dem Feuchtigkeitsgehalt möglichst gleichzeitig ausgelöst wird und gleich schnell ablaufen kann.

Diese Aufgabe wird erfindungsgemäss dadurch gelöst, dass zur Auslösung der Polymerisationreaktion ein heisses Fluid unter erhöhtem Druck im Bereich von 0,2-2 MPa, in den das Halbfabrikat enthaltenden Hohlraum der druckdicht geschlossenen Presse eingelassen wird, während der Dauer der Polymerisation des Bindemittels, das Fluid weiterhin unter diesem Druck gehalten wird, vor der Entnahme des erzeugten Formkörpers aus der geöffneten Formpresse, das Fluid aus der Formpresse abgelassen und einer Filteranlage zugeführt wird.

Beim Verfahren zur Herstellung des erfindungsgemässen Formkörpers wird ein aus mindestens einer Schicht bestehendes Halbfabrikat in eine offene heiz- und kühlbare Formpresse eingelegt, beim Schliessen der Formpresse druckdicht abgeschlossen und bei Bedarf verdichtet. Nach dem Evakuieren der Luft im Formnest und durch Einleiten trocken gesättigten Wasserdampfes, in das Formnest,
werden für die Reaktion ideale Temperatur und Feuchtigkeitsgehalt in allen Bereichen des Formkörpers gleichzeitig bewerkstelligt. Dieses Druckgas erzeugt im Formnest einen Innendruck von mehreren bar, welcher solange aufrecht erhalten wird, bis das eingebrachte Bindemittel auspolymerisiert ist. Im Unterschied zu konventionellen Verfahren wird also keine FluidStrömung erzeugt, sondern bleiben die Druckverhältnisse während des Aushärtens stabil. Damit können die meisten der erzeugten gasförmigen und toxischen Spaltprodukte während der gesamten Aushärtungszeit an der Vernetzung teilnehmen. Der Anteil an nicht polymerisierten Bindemitteln reduziert sich damit erheblich. Dadurch können etwa Phenolnovolak-Pulverharze mit einem deutlich geringeren Gehalt an Hexamethylentetramin verwendet werden. Dies führt ebenfalls zu einer Emissionsreduzierung. Weiter kann für die Herstellung eines Produktes mit bestimmten mechanischen Eigenschaften die Menge des benötigten Bindemittels gegenüber den herkömmlichen Verfahren drastisch gesenkt werden. Schliesslich werden durch eine weitgehend vollständige Reaktion des Bindemittels mögliche ungebundene Spaltprodukte vermieden. Als Fazit ergeben sich massiv geringere Emissionen an Formaldehyd, Phenol und Ammoniak, wodurch sich auch die Geruchsbildung in einem entscheidenden Masse reduziert. Das Verfahren verbessert insbesondere auch gegenüber herkömmlichen Verfahren die Nutzung der für die Herstellung benötigten Energie.

Es versteht sich, dass als Druckgas auch ein katalytisch wirkendes Druckmedium verwendet werden kann.

Eine zur Durchführung des Verfahrens geeignete heizbare Pressform weist ein erstes Pressformteil mit Dampfzufuhrleitungen auf. Ein zweites Pressformteil ist dampf sperrend und schliesst druckdicht mit dem ersten Formteil.

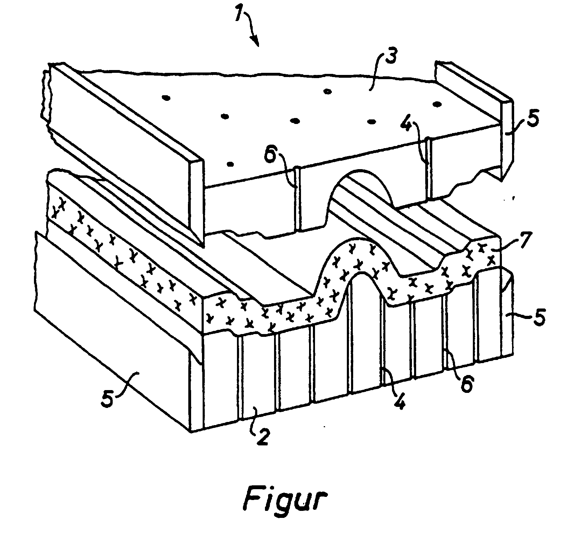

Nachfolgend soll ein Ausführungsbeispiel des erfindungsgemässen Formkörpers und das bevorzugte Verfahren zur Herstellung desselben mit Hilfe der Figuren beschrieben werden. Es zeigt:
Einzige Figur: einen in einer geeigneten Pressform ausgeformten erfindungsgemässen Formkörper.

Diese Figur zeigt eine Pressform 1, die aus einer unteren Formhälfte 2 und einer oberen Formhälfe 3 besteht,
wobei diese Formhälften mit üblichen hier nicht näher dargestellten Mitteln aufgeheizt werden. Diese beiden Formhälften bilden zusammen ein Formnest, in welchem das Halbfabrikat gepresst und ausgehärtet wird. Ein bevorzugtes Halbfabrikat besteht aus einem Faservlies aus vorwiegend natürlichen Fasern mit anderen Füllstoffen in kleinen Mengen, und ist mit pulverförmigen Novolakharzen versetzt.

Die üblicherweise herzustellenden Werkstücke in der Grösse von 150mm x 150mm bis 1800mm x 2000mm weisen eine Dichte von 40 kg/m³ bis zu 1'200 kg/m³ auf.
In dem dargestellen Ausführungsbeispiel weisen die beiden Formhälften eine Vielzahl von feinen 1-4 mm weiten Kanälen 4
auf, durch welche das Fluid in das Formnest eingeleitet wird. Die dargestellte Presse weist an ihren Rändern Schneid- und Dichtungselemente 5 auf, welche unabhängig bewegt und verschoben werden können, und die geschlossene Form perimetral druckdicht abschliessen, z.B. durch einen Labyrinth-Verschluss. Nach dem druckdichten Schliessen der Presse 1 wird das Halbfabrikat dem heissen Fluid ausgesetzt. Erfindungsgemäss wird als Fluid gesättigter trockener Wasserdampf verwendet. Dieses Fluid weist einen statischen Druck von 0,2-2 MPa, üblicherweise einen solchen von 10 bar auf, und verweilt während ca. 20 - 200 Sekunden
bei 150°- 200° Celsius unter diesem Druck im Formnest.

Die vorliegende Erfindung basiert unter anderem auf der Erkenntnis, dass zur raschen und gleichmässigen Polymerisationsreaktion das Fluid bei vorgegebenem Druck, welcher durch die zu erzielende Verdichtung vorgegeben ist, eine möglichst hohe Enthalpie aufweisen sollte. Dazu wird erfindungsgemäss ein Fluid eingesetzt, dessen Aggregatzustand durch die Grenzkurve zwischen Nassdampf und ueberhitztem Dampf seines Mollier-Diagramms definiert ist. Damit wird nicht bloss die Polymerisationsreaktion an allen Stellen des faserigen Halbfabrikats gleichzeitig ausgelöst, sondern werden auch die gasförmigen Spaltprodukte des Bindemittels weiterhin in der Umgebung des Harzes belassen und nicht fortgespült. So können sogar gleichmässig vernetzte Formkörper 7 von über 80 mm Dicke hergestellt werden. Vor den Öffnen der Presse wird das Druckmedium bspw. über absperrbare Kanäle 6 abgelassen.

Vorzugsweise werden zur Herstellung der faserigen Halbfabrikate Baumwollfasern, insbesondere rezyklierte Baumwollfasern verwendet. Herausragende akustische und geruchsfreie Produkte können aber auch mit Faservliesen, welche andere poröse Materialien, insbesondere Schaumgummi, Glasfaser- oder Kunstfasergewebereste aufweisen, erzielt werden.

Folgende Tabelle zeigt die gemessenen Emissionsfaktoren für zwei nach konventionellen Verfahren hergestellte Formkörper und einen erfindungsgemässen Formkörper:

| Schadstoffe | konventioneller Formkörper (1987) | konventioneller Formkörper (1990) | erfindungsgem. Formkörper (1992) |
|---|---|---|---|
| Phenol | 0.07 g/kg | 0.2 g/kg | 0.00033 g/kg |
| Formaldehyd | 0.00624 g/kg | 0.006 g/kg | 0.0007 g/kg |
| Ammoniak | 2.6 g/kg | 2.6 g/kg | 0.64 g/kg |

Diese Messungen zeigen eindrücklich, wie beim erfindungsgemässen Formkörper 7 mit seinem gleichmässigen Vernetzungsgrad der Emissionsfaktor überraschend deutlich verringert ist.

Eine Geruchsmessung nach Ford ergab für ein erfindungsgemässes Produkt die Noten: x = 2.4 und s = 0.42.

Es versteht sich, dass mit dieser gleichmässigen Polymerisation auch die üblicherweise benötigte Menge an Bindemittel angemessener dosiert werden kann und damit eine konstantere Qualität erzielt werden kann.

Ein weiterer Vorteil des erfindungsgemässen Herstellungsverfahrens zeigt sich darin, dass die Pressen bedeutend weniger oft gereinigt werden müssen, resp. weniger Antihaftmittel eingesetzt werden muss. Das erfindungsgemässe Verfahren erlaubt erstmals auch die Herstellung von auspolymerisierten Formkörpern mit einer Dicke von über 80 mm.

Es versteht sich auch, dass der erfindungsgemässe Faserkörper nicht nur ganz allgemein in der Fahrzeugtechnik verwendet werden kann, sondern zur Minderung der Lärm- und Wärmeabstrahlung von elektrischen Maschinen und Anlagen, Baumaschinen, Ventilatoren, Pumpen etc. eingesetzt werden kann.

## Patentansprüche

1. Verfahren, bei welchem ein faseriges Halbfabrikat unter Druck in einer heizbaren Pressform, welche gasdicht geschlossen wird, einem heissen Fluid ausgesetzt wird und nach einer vorbestimmten Zeit der Pressform wieder entnommen wird, wobei während einer gewünschten Verweilzeit das Fluid unter erhöhtem Druck, im Bereich von 0.2 bis 2 MPa, in der druckdicht geschlossenen Pressform gehalten wird und vor der Entnahme eines erzeugten Formkörpers das verbrauchte Fluid aus der Pressform abgelassen wird, **dadurch gekennzeichnet, dass** zum Herstellen eines, Bereiche mit unterschiedlichem Verformungsgrad und Dicke aufweisenden, porösen Formkörpers zum Auskleiden von schall- und wärmeabstrahlenden Fahrzeugteilen ein faseriges Halbfabrikat, welches mindestens ein aus Baumwollund/oder Glas- und/oder Kunstfasern und einem duroplastischen Bindemittel bestehendes Faservlies umfasst, in die Pressform eingelegt wird, und für eine homogene Polymerisationsreaktion das heisse Fluid im Zustand eines trocken gesättigten Dampfes in den das Halbfabrikat enthaltenden Hohlraum der Pressform eingelassen wird.

2. Verfahren nach Anspruch 1, **dadurch gekennzeichnet, dass** als Fluid gesättigter, trockener Wasserdampf verwendet wird.

3. Verfahren nach Anspruch 2, **dadurch gekennzeichnet, dass** als Bindemittel thermisch härtende Novolakharze verwendet werden.

4. Verfahren nach Anspruch 3, **dadurch gekennzeichnet, dass** dem Halbfabrikat nur soviel Bindemittel zugefügt wird, dass die die Formaldehydemission des Formkörpers geringer als 20 ppm ist.

5. Poröser, schall- und/oder wärmedämmend wirkender Formkörper, der aus Baumwoll- und/oder Glas- und/oder Kunstfasern besteht, zum Auskleiden von schall- und /oder wärmeabstrahlenden Fahrzeugteilen, welcher Formkörper für den passgenauen Einbau geformt ist und Bereiche mit unterschiedlichem Verformungsgrad und Dicke aufweist, **dadurch gekennzeichnet, dass** der Formkörper nach dem Verfahren gemäss Anspruch 1 erhälthich ist, wobei das Bindemittel in allen Bereichen des porösen Formkörpers, an allen Orten und unabhängig von der spezifischen Formgebung gleichmässig vernetzt ist und dieser nur soviel Bindemittel enthält, dass die Formaldehydemission weniger als 20 ppm ist.

6. Formkörper nach Anspruch 5, **dadurch gekennzeichnet, dass** dieser mit thermisch härtenden Novolakharzen verfestigt ist.

7. Formkörper nach Anspruch 5, **dadurch gekennzeichnet, dass** dieser ein Einschichtprodukt ist, welches eine Schichtdicke von mehr als 50 mm aufweist.

8. Formkörper nach Anspruch 5, **dadurch gekennzeichnet, dass** mindestens eine Dekor- oder Schutzschicht auf diesen Formkörper aufgebracht ist.

## Claims

1. Process by which a fibrous semifinished product is exposed to a hot fluid in a heatable compression mould which is sealed so as to be impermeable to gas, and which semifinished product is removed after a predetermined interval from the compression mould, whereby the fluid is retained in the pressure-resistant, sealed pressure mould under increased pressure in the range of 0.2 to 2 Mpa during a predetermined period of time, and prior to removal of the thus produced moulding the spent fluid is discharged from the compression mould,
**wherein** for the production of a porous moulding for lining sound and heat emitting vehicle body parts, said moulding having regions with differing degrees of shaping and thickness, a fibrous semifinished product comprising at least one nonwoven made of cotton and/or glass fibers and/or synthetic fibers and a thermosetting crosslinking/binding agent are inserted into the pressure moulding, and in order to obtain a homogenous polymerization reaction the hot fluid in the state of a heated saturated steam is introduced into the cavity of the compression mould containing the semifinished product.

2. Process according to claim 1, **wherein** saturated dry water steam is used as a fluid.

3. Process according to claim 2, **wherein** a thermosetting novolak resin is used as binding agent.

4. Process according to claim 3, **wherein** a sufficiently small amount of binding agent is added to the semifinished product such that less than 20 ppm formaldehyde is emitted from the moulding.

5. A porous, sound and/or heat damping moulding made of cotton and/or glass fibers and/or synthetic fibers, for lining vehicle parts which emit sound and/or heat, said moulding being shaped for an exact fitting and comprising regions having differing degrees of shaping and thickness, wherein the moulding is acheived according to the process in claim 1, whereby the binding agent is uniformly crosslinked in all regions of the porous moulding, irrespective of their specifing shape, and contains only that amount of bindner such that the formaldehyde emission is less than 20 ppm

6. Moulding according to cliam 5, **wherein** said moulding is hardened with thermosetting novolak resins.

7. Moulding according to claim 5, **wherein** said moulding is a single layer product having a layer thickness of more than 50 mm.

8. Moulding according to claim 5, **wherein** at least one decor layer or protective layer is applied to said moulding.

## Revendications

1. Procédé dans lequel un produit semi-fini fibreux est exposé sous pression dans un moule chauffant, lequel est fermé de manière étanche aux gaz, à un fluide chaud et, après un temps prédéterminé, est retiré du moule, dans lequel, pendant un temps de séjour désiré, le fluide sous pression accrue, dans la plage de 0,2 à 2 MPa, est maintenu dans le moule fermé de manière étanche aux gaz et, avant le retrait d'un corps moulé produit, le liquide utilisé est évacué du moule, **caractérisé en ce que** pour la fabrication d'un corps moulé poreux, présentant des zones avec degré de déformation différent et épaisseur différente, destiné au revêtement de pièces de véhicule rayonnant le son et la chaleur, un produit semi-fini fibreux, lequel comprend au moins un nontissé constitué de fibres de coton et/ou de verre et/ou de matière plastique ainsi qu'un liant thermodurcissable, est introduit dans le moule et, pour une réaction homogène de polymérisation, le fluide chaud est introduit, à l'état d'une vapeur saturée sèche, dans la cavité du moule contenant le produit semi-fini.

2. Procédé selon la revendication 1, **caractérisé en ce que** de la vapeur d'eau saturée, sèche, est utilisée comme fluide.

3. Procédé selon la revendication 2, **caractérisé en ce que** de la résine Novolaque thermodurcissable est utilisée comme liant.

4. Procédé selon la revendication 3, **caractérisé en ce qu'**il est ajouté au produit semi-fini seulement autant de liant qu'il faut pour que le dégagement de formaldéhyde par le corps moulé soit inférieur à 20 ppm.

5. Corps moulé poreux, ayant un effet insonorisant et/ou calorifuge, qui est constitué de fibres de coton et/ou de verre et/ou de matière plastique, destiné au revêtement de pièces de véhicule rayonnant le son et la chaleur, lequel corps moulé est formé pour un montage à ajustement précis et présente des zones avec degré de déformation différent et épaisseur différente, **caractérisé en ce que** le corps moulé peut être obtenu par le procédé selon la revendication 1, le liant étant régulièrement réticulé dans toutes les zones du corps moulé poreux, à tous les emplacements et indépendamment de la forme spécifique, et le corps poreux contenant seulement autant de liant qu'il faut pour que le dégagement de formaldéhyde soit inférieur à 20 ppm.

6. Corps moulé selon la revendication 5, **caractérisé en ce que** celui-ci est consolidé avec des résines Novolaque thermodurcissables.

7. Corps moulé selon la revendication 5, **caractérisé en ce que** celui-ci est un produit monocouche qui présente une épaisseur de couche de plus de 50 mm.

8. Corps moulé selon la revendication 5, **caractérisé en ce qu'**au moins une couche de décor ou de protection est appliquée sur ce corps moulé.
